**Europäisches Patentamt**

**European Patent Office**

**Office européen des brevets**

(19)

(11) Veröffentlichungsnummer : **0 446 228 B1**

(12) # EUROPÄISCHE PATENTSCHRIFT

(45) Veröffentlichungstag der Patentschrift :
**27.05.92 Patentblatt 92/22**

(51) Int. Cl.$^5$ : **B32B 27/04,** B32B 29/06, B44C 5/04

(21) Anmeldenummer : **89912784.9**

(22) Anmeldetag : **30.10.89**

(86) Internationale Anmeldenummer :
**PCT/EP89/01291**

(87) Internationale Veröffentlichungsnummer :
**WO 90/06232 14.06.90 Gazette 90/14**

(54) **DEKORATIVE SCHICHTPRESSSTOFFPLATTE UND VERFAHREN ZUR HERSTELLUNG EINER DECKSCHICHT HIERFÜR.**

(30) Priorität : **05.12.88 DE 3840877**

(43) Veröffentlichungstag der Anmeldung :
**18.09.91 Patentblatt 91/38**

(45) Bekanntmachung des Hinweises auf die Patenterteilung :
**27.05.92 Patentblatt 92/22**

(84) Benannte Vertragsstaaten :
**AT BE CH DE FR GB IT LI LU NL SE**

(56) Entgegenhaltungen :
**EP-A- 0 025 430
GB-A- 1 452 858
US-A- 2 413 931
US-A- 4 765 858**

(73) Patentinhaber : **RESOPAL GMBH
Hans-Böckler-Strasse 4
W-6114 Gross-Umstadt (DE)**

(72) Erfinder : **HOLZER, Herbert
Wingertsweg 15
W-6114 Gross-Umstadt (DE)**

(74) Vertreter : **Katscher, Helmut, Dipl.-Ing.
Bismarckstrasse 29
W-6100 Darmstadt (DE)**

EP 0 446 228 B1

**Beschreibung**

Die Erfindung betrifft eine dekorative Schichtpreßstoffplatte, bestehend aus mehreren Lagen von phenolharzgetränkten Kernpapieren und einer Deckschicht aus melaminharzgetränktem Dekorpapier und/oder Overlay-Papier.

Dekorative Schichtpreßstoffplatten nach DIN 16 926, auch als Hochdrucklaminat (HPL) bezeichnet, weisen auf der Oberseite eines aus Kernpapieren bestehenden Kerns jeweils eine Deckschicht auf, die aus einfarbigem oder bedrucktem Dekorpapier und gegebenenfalls einem durchsichtigen Overlay-Papier bestehen und mit Melaminharz oder einem ähnlichen Aminoplastharz getränkt und mit den Kernpapieren verpreßt sind.

Ein wesentliches und für den Einsatz der Schichtpreßstoffplatten wichtiges Merkmal ist die Beständigkeit der Melaminharz-Oberflächen gegenüber der Einwirkung vieler Chemikalien. Als nachteilig wird empfunden, daß auf der Melaminharz-Oberfläche Lacke der unterschiedlichen Lacksysteme schlecht haften. Wegen der verhältnismäßig großen Härte und glasartigen Struktur der Melaminharz-Oberfläche wäre es aber erwünscht, eine etwas weichere und zähere, dabei aber weniger spröde Lackschicht aufzubringen. Durch eine solche Oberflächengestaltung könnten die Einsatzgebiete der dekorativen Schichtpreßstoffplatten wesentlich erweitert werden.

Es ist zwar bekannt (DE-A-36 30 315), auf der Oberfläche einer dekorativen Schichtpreßstoffplatte eine gegen Verschleiß widerstandsfähige Beschichtung aus Acrylat aufzubringen. Diese Acrylatschicht muß aber beim Preßvorgang gemeinsam mit dem Melaminharz aushärten und kann deshalb nicht nachträglich aufgebracht werden. Auf diese Weise ist es nicht möglich, dekorative Schichtpreßstoffplatten herzustellen, die anschließend in irgendeinem Stadium der Verarbeitung mit einem an die Anforderungen des jeweiligen Einsatzgebietes angepaßten Lackauftrag versehen werden können. Ein nach dem Aushärten des Melaminharzes aufgebrachter Acrylatlack würde auf der Melaminharz-Oberfläche nicht die erforderliche Haftung aufweisen.

Es ist auch bekannt (GB-A-1 452 858), Polyvinylbutyral als Kleberschicht auf die Rückseite eines rohen, nicht mit Melaminbarz imprägnierten Dekorpapiers aufzubringen. Diese Kleberschicht soll die Verbindung des rohen Dekorpapiers mit dem phenolharzimprägnierten Kern der in diesem Zeitpunkt noch nicht fertiggestellten Schichtpreßstoffplatte beim nachfolgenden Verpressen bewirken.

Das Polyvinylbutyral bildet hierbei keine Haftgrundschicht, auf der ein zu einem beliebigen späteren Zeitpunkt aufgebrachter Lackauftrag besser haften würde, sondern bildet unmittelbar einen Kleber. Deshalb wird das Polyvinylbutyral hier nur als ein Beispiel für eines von mehreren wärmeaushärtbaren Harzen genannt. Erst durch die Wärmeaushärtung dieses Harzes wird die Klebewirkung erreicht, mit der das nichtimprägnierte Dekorpapier mit dem harzimmprägnierten Kern der Schichtpreßstoffplatte verbunden wird, und zwar erst bei dem danach erfolgenden Vorgang des Verpressens.

Es ist zwar bekannt (Prospekt "Pioloform B" der Firma Wacker), Melaminharze mit Polyvinylbutyral zu kombinieren, um Einbrennlacke oder bei Raumtempratur härtende Harzsysteme zu erhalten. Diese Zumischung von Polyvinylbutyral zu dem Melaminharz mit dem die Papierbahn für die Deckschicht getränkt wird, scheidet bei der Herstellung von Deckschichten für dekorative Schichtpreßstoffplatten jedoch aus, weil das zur Tränkung der Dekorpapiere verwendete Melaminharz in wässriger Lösung vorliegt, Polyvinylbutyral in Wasser jedoch nicht hinreichend löslich ist.

Augabe der Erfindung ist es daher, eine dekorative Schichtpreßstoffplatte der eingangs genannten Gattung zu schaffen, die eine lackierfähige Oberfläche hat.

Diese Aufgabe wird erfindungsgemäß dadurch gelöst, daß die Deckschicht-Oberfläche eine Haftgrundschicht aus Polyvinylbutyral aufweist.

Durch die auf die äußere Oberfläche der Deckschicht aufgebrachte Haftschicht aus Polyvinylbutyral wird ein ausgezeichneter Haftgrund für Lacke erreicht, ohne daß dadurch der Aufbau und die optischen Eigenschaften der Schichtpreßstoffplatte selbst beeinträchtigt werden. Auf die so vorbereitete Oberfläche der Schichtpreßstoffplatte kann der Lackauftrag zu einem beliebigen späteren Zeitpunkt im Laufe der Verarbeitung aufgebracht werden. Das Aussehen und die mechanischen Eigenschaften der mit der Haftgrundschicht versehenen Schichtpreßstoffplatte unterscheiden sich von den entsprechenden Eigenschaften einer herkömmlichen Schichtpreßstoffplatte ohne eine solche Haftgrundschicht nicht.

Die Erfindung betrifft auch ein Verfahren zur Herstellung einer Deckschicht für eine dekorative Schichtpreßstoffplatte der eingangs genannten Gattung.

Das erfindungsgemäße Verfahren geht aus von einem bekannten Verfahren zur Herstellung einer Deckschicht für eine dekorative Schichtpreßstoffplatte, wobei eine Deckschichtbahn aus Dekorpapier oder Overlay-Papier mit Melaminharz getränkt und getrocknet wird. Die so erhaltene Deckschichtbahn wird auf einen Stapel aus Kernpapieren aufgelegt und gemeinsam zu einer Schichtpreßstoffplatte verpreßt.

Aufgabe der Erfindung ist es, ein Verfahren anzugeben, mit dem die Haftgrundschicht in möglichst einfacher, Arbeit und Material sparender Weise aufgebracht werden kann.

Diese Aufgabe wird gemäß einem ersten erfinderischen Lösungsweg dadurch gelöst, daß auf die Deckschichtbahn nach dem Trocknen Polyvinylbutvral aus alkoholischer Lösung als Haftgrundschicht auf die Deckschichtbahn nach dem Trocknen aufgebracht und die Deckschichtbahn anschließend erneut getrocknet wird.

Der Auftrag aus der Lösung kann in fertigungstechnisch einfacher Weise mit allen üblichen Beschichtungseinrichtungen wie Drahtrakel, Rollrakel, Näpfchenwalze od. dgl. erfolgen.

In Ausgestaltung des Erfindungsgedankens ist vorgesehen, daß das als Haftgrundschicht aufgebrachte Polyvinylbutyral Polyvinylacetal, Polyvinylacetat und Polyvinylalkohol enthält, und zwar vorzugsweise 75 - 85 % Polyvinylacetal, 12 - 22 % Polyvinylacetat und ca. 3 % Polyvinylalkohol (jeweils Gewichtsprozent).

Gemäß einem anderen, bevorzugten Lösungsweg nach der Erfindung ist vorgesehen, daß die melaminharzgetränkte, harzfeuchte Deckschichtbahn mit pulverförmigem Polyvinylbutyral bepudert und anschließend zur Bildung einer Haftgrundschicht getrocknet wird.

Hierbei entfällt die Notwendigkeit, das Polyvinylbutyral als alkoholische Lösung aufzubereiten, so daß bei der Verarbeitung auch keine Lösungsmitteldämpfe anfallen und somit Emissionsquellen vermieden werden.Weiter entfällt die Notwendigkeit einer zweiten Trocknungsstufe, da das Aufbringen der Haftgrundschicht auf die noch harzfeuchte Papierbahn, d. h. noch vor dem einmaligen Trocknungsvorgang erfolgt.

Weitere vorteilhafte Ausgestaltung der erfindungsgemäßen Verfahren sind Gegenstand weiterer Unteransprüche.

Nachfolgend werden Ausführungsbeispiele der Erfindung anhand der Zeichnung erläutert. Es zeigt:

Fig. 1 eine vergrößerte räumliche Darstellung einer dekorativen Schichtpreßstoffplatte, teilweise im Schnitt,

Fig. 2 in vereinfachter Darstellungsweise den Herstellungsablauf einer mit einer Haftgrundschicht versehenen Deckschichtbahn für eine dekorative Schichtpreßstoffplatte und

Fig. 3 in einer Darstellung entsprechend der Fig. 2 ein anderes Herstellungsverfahren.

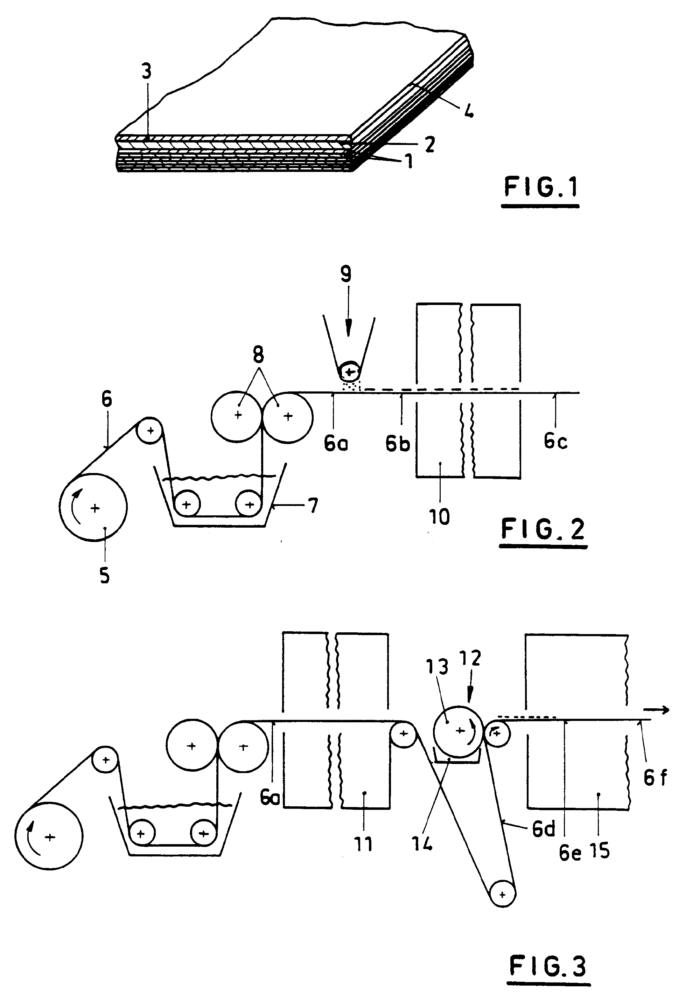

Die in Fig. 1 dargestllte dekorative Schichtpreßstoffplatte besteht aus mehreren Lagen von phenolharzgetränkten Kernpapieren 1. Auf den aus den Kernpapieren 1 bestehenden Stapel ist an der Oberseite ein melaminharzgetränktes Dekorpapier 2 aufgelegt, das unmittelbar die Deckschicht der Schichtpreßstoffplatte bilden kann. Beim Ausführungsbeispiel nach Fig. 1 ist auf dem Dekorpapier 2 ein ebenfalls melaminharzgetränktes Overlay-Papier 3 als Deckschicht angeordnet. Alle Schichten sind nach dem Trocknen zur Bildung .der Schichtpreßstoffplatte gepreßt.

Auf der Oberfläche der Deckschicht 3 ist eine Haftgrundschicht 4 aus Polyvinylbutyral aufgebracht. Diese Haftgrundschicht 4 bildet einen Primer oder Haftvermittler, der einen Haftgrund für Lacke darstellt. Die Haftgrundschicht ist vorzugsweise in einer Menge von 2 - 10 g/m² aufgebracht.

Eines der möglichen Verfahren zum .Aufbringen der Haftgrundschicht 4 ist in Fig. 2 gezeigt. Von einer Rohpapierrolle 5 wird eine Papierbahn 6 des Dekorpapiers oder des Overlay-Papier abgezogen und durch eine mit flüssigem Melaminharz gefüllte Imprägnierwanne 7 geführt. Überschüssiges Melaminharz wird zwischen den nachfolgenden Quetschwalzen 8 entfernt.

Die noch harzfeuchte Deckschichtbahn 6a wird unter einer Bepuderungseinrichtung 9 entlanggeführt. Dort wird auf die harzfeuchte Papierbahn eine dünne Oberflächenschicht von pulverförmigem Polyvinylbutyral mit Partikelgrößen von 5 - 50 µm aufgetragen. Diese Bepuderung erfolgt mechanisch oder vorzugsweise elektrostatisch, indem das pulverförmige Polyvinylbutyral durch Beschleunigung der Pulverpartikel in einem elektrostatischen Feld aufgetragen wird.

Anschließend durchläuft die harzfeuchte, beschichtete Papierbahn 6b einen Schwebetrockner 10, in dem das Melaminharz getrocknet wird. Die so erhaltene Deckschichtbahn 6c wird in herkömmlicher Weise zur Herstellung einer Schichtpreßstoffplatte, wie beispielsweise in Fig. 1 dargestellt, verwendet.

Eine andere Ausführungsform des Verfahrens ist in Fig. 3 dargestellt. Wie schon bei Fig. 2 beschrieben, wird von einer Rohpapierrolle 5 eine Papierbahn 6 des Dekorpapiers oder des Overlay-Papiers abgezogen und durch eine mit flüssigem Melaminharz gefüllte Imprägnierwanne 7 geführt. Überschüssiges Melaminharz wird zwischen den nachfolgenden Quetschwalzen 8 entfernt.

Die harzfeuchte Papierbahn 6a wird in einem ersten Schwebetrockner 11 getrocknet. In einer Bestreicheinrichtung 12, die beispielsweise eine Rakelwalze 13 aufweist, wird auf die getrocknete Deckschichtbahn 6d eine Haftgrundschicht aus einer alkoholischen Lösung aufgetragen, die in einer Wanne 14 enthalten ist, in die das Rakelwalze 13 taucht.

Das hierbei verwendete Polyvinylbutyral hat vorzusweise einen Gehalt von 75 - 85 % Polyvinylacetal, 12 - 22 % Polyvinylacetat und ca. 3 % Polyvinylalkohol. Der Auftrag des Primers erfolgt aus der alkoholischen Lösung auf die mit Melaminharz imprägnierte und getrocknete Papierbahn 6d, wobei die homologe Reihe von Methanol bis Butanol verwendet werden kann. Ebenso sind die isomeren Formen von Propanol und Butanol geeignet. Bewährt haben sich Lösungen mit 5 - 15 % Feststoffgehalt. Der Auftrag aus der Lösung kann mit allen üblicherweise verwendeten Beschichtungseinrichtungen erfolgen; neben der beschriebenen Rakelwalze können beispielsweise Drahtrakel, Näpfchenwalzen und dgl. verwendet werden.

Anschließend läuft die beschichtete Bahn 6e durch einen zweiten Schwebetrockner 15. Dort wird die Haftgrundschicht getrocknet. Die aus dem Schwebetrockner 15 austretende Deckschichtbahn 6f kann anschließend ebenso wie die Deckschichtbahn 6c beim Beispiel nach Fig. 2 weiterverarbeitet werden.

## Patentansprüche

1. Dekorative Schichtpreßstoffplatte, bestehend aus mehreren Lagen von phenolharzgetränkten Kernpapieren und einer Deckschicht aus melaminharzgetränktem Dekorpapier und/oder Overlay-Papier, dadurch gekennzeichnet, daß die Deckschicht-Oberfläche eine Haftgrundschicht (4) aus Polyvinylbutyral aufweist.

2. Verfahren zur Herstellung einer Deckschicht für eine dekorative Schichtpreßstoffplatte gemäß Anspruch 1, wobei eine Deckschichtbahn aus Dekorpapier oder Overlay-Papier mit Melaminharz getränkt und getrocknet wird, dadurch gekennzeichnet, daß auf die Deckschichtbahn nach dem Trocknen Polyvinylbutyral aus einer alkoholischen Lösung als Haftgrundschicht aufgebracht und die Deckschichtbahn anschließend erneut getrocknet wird.

3. Verfahren nach Anspruch 2, dadurch gekennzeichnet, daß das als Haftgrundschicht aufgebrachte Polyvinylbutyral Polyvinylacetal, Polyvinylacetat und Polyvinylalkohol enthält.

4. Verfahren nach Anspruch 3, dadurch gekennzeichnet, daß das als Haftgrundschicht aufgebrachte Polyvinylbutyral 75 - 85 % Polyvinylacetal, 12 - 22 % Polyvinylacetat und ca. 3 % Polyvinylalkohol enthält.

5. Verfahren nach Anspruch 2, dadurch gekennzeichnet, daß als Lösungsmittel Alkohol der homologen Reihe von Methanol bis Butanol verwendet wird.

6. Verfahren nach einem der Ansprüche 2, dadurch gekennzeichnet, daß als Lösungsmittel Alkohol der isomeren Formen von Propanol oder Butanol verwendet wird.

7. Verfahren nach einem der Ansprüche 2-6, dadurch gekennzeichnet, daß eine Lösung mit 5 - 15 % Feststoffgehalt verwendet wird.

8. Verfahren zur Herstellung einer Deckschicht für eine dekorative Schichtpreßstoffplatte gemäß Anspruch 1, wobei eine Deckschichtbahn aus Dekorpapier oder Overlay-Papier mit Melaminharz getränkt und getrocknet wird, dadurch gekennzeichnet, daß die melaminharzgetränkte, harzfeuchte Deckschichtbahn mit pulverförmigem Polyvinylbutyral bepudert und anschließend zur Bildung einer Haftgrundschicht getrocknet wird.

9. Verfahren nach Anspruch 8, dadurch gekennzeichnet, daß das pulverförmige Polyvinylbutyral mit einer Partikelgröße von 5 - 50 µm verwendet wird.

10. Verfahren nach Anspruch 8 oder 9, dadurch gekennzeichnet, daß das pulverförmige Polyvinylbutyral durch Beschleunigung der Pulverpartikel in einem elektrostatischen Feld aufgetragen wird.

11. Verfahren nach einem der Ansprüche 2 - 10, dadurch gekennzeichnet, daß als Haftgrundschicht Polyvinylbutyral in einer Menge von 2 - 10 g/m² auf die Oberfläche der Deckschicht aufgebracht wird.

## Claims

1. A decorative laminated panel, consisting of several layers of core papers impregnated with phenolic resin and a surface coat of decorative paper and/or overlay paper impregnated with melamine resin, characterized in that the surface of the surface coat has an adhesive base layer (4) of polyvinyl butyral.

2. A process for the production of a surface coat for a decorative laminated panel as defined in claim 1, wherein a surface coat web of decorative paper or overlay paper is impregnated with melamine resin and dried, characterized in that after drying, polyvinyl butyral is applied to the surface coat web, from an alcohol solution after which the surface coat web is redried.

3. A process as defined in claim 2, wherein the polyvinyl butyral applied as an adhesive base layer contains polyvinyl acetal, polyvinyl acetate, and polyvinyl alcohol.

4. A process as defined in claim 3, wherein the polyvinyl butyral applied as an adhesive base layer contains 75-85% polyvinyl acetal, 12-22% polyvinyl acetate, and approximately 3% polyvinyl alcohol.

5. A process according to one of the claims 2, characterized in that alcohol of the homologue series of methanol to butanol is used as a solvent.

6. A process as defined in claim 2, characterized in that alcohol of the isomeric form of propanol or butanol is used as a solvent.

7. A process as defined in one of the claims 2-6, characterized in that a solution with 5-15% solid content is used.

8. A process for the production of a surface coat for a decorative laminated panel as defined in claim 1, wherein a surface coat web of decorative paper or overlay paper is impregnated with melamine resin and dried, characterized in that the surface coat web that has been impregnated with melamine resin and is still wet with resin is powdered with polyvinyl butyral powder and then dried so as to form an adhesive base layer.

9. A process as defined in claim 8, characterized in that the polyvinyl butyral powder is used at a particle size of 5-50 microns.

10. A process as defined in claim 8 or claim 9, characterized in that the polyvinyl butyral powder is applied by accelerating the powder particles in an electrostatic field.

11. A process as defined in one of the claims 2 to 10, characterized in that polyvinyl butyral is applied to the surface of the surface coat at a rate of 2-10 g/m$^2$ to form an adhesive base layer.


## Revendications

1. Plaque stratifiée de décoration, constituée par plusieurs couches de papier support underlay imprégné de résine phénolique et par une couche de recouvrement en papier de décoration et/ou en papier overlay imprégné de résine de mélamine, caractérisée en ce que la surface de la couche de recouvrement présente une couche de fond d'adhérence (4) en polyvinylbutyral.

2. Procédé pour la fabrication d'une couche de recouvrement pour une plaque stratifiée de décoration selon la revendication 1, dans lequel une bande de couche de recouvrement en papier de décoration ou en papier overlay est imprégnée de résine de mélamine et séchée, caractérisé en ce qu'on applique sur la bande de couche de recouvrement, après le séchage, du polyvinylbutyral en solution alcoolique comme couche de fond d'adhérence et en ce qu'on sèche à nouveau consécutivement la bande de couche de recouvrement.

3. Procédé selon la revendication 2, caractérisé en ce que le polyvinylbutyral appliqué comme couche de fond d'adhérence contient du polyvinylacétal, du polyacétate de vinyle et de l'alcool polyvinylique.

4. Procédé selon la revendication 3, caractérisé en ce que le polyvinylbutyral appliqué comme couche de fond d'adhérence contient 75 à 85 % de polyvinylacétal, 12 à 22 % de polyacétate de vinyle et environ 3 % d'alcool polyvinylique.

5. Procédé selon la revendication 2, caractérisé en ce qu'on utilise comme solvant un alcool de la série homologue allant du méthanol au butanol.

6. Procédé selon la revendication 2, caractérisé en ce qu'on utilise comme solvant un alcool parmi les formes isomères du propanol ou du butanol.

7. Procédé selon l'une quelconque des revendications 2 à 6, caractérisé en ce qu'on utilise une solution présentant une teneur en matières solides comprise entre 5 et 15 %.

8. Procédé pour la fabrication d'une couche de recouvrement pour une plaque stratifiée de décoration selon la revendication 1, dans lequel une bande de couche de recouvrement en papier de décoration ou en papier overlay est imprégnée de résine de mélamine et séchée, caractérisé en ce que la bande de couche de recouvrement, imprégnée de résine de mélamine, humide de résine, est saupoudrée de polyvinylbutyral sous forme de poudre et en ce q'uelle est séchée consécutivement de manière à former une couche de fond d'adhérence.

9. Procédé selon la revendication 8, caractérisé en ce qu'on utilise du polyvinylbutyral sous forme de poudre présentant une granulométrie comprise entre 5 et 50 μm.

10. Procédé selon la revendication 8 ou 9, caractérisé en ce qu'on applique le polyvinylbutyral sous forme de poudre par accélération des particules de poudre dans un champ électrostatique.

11. Procédé selon l'une quelconque des revendications 2 à 10, caractérisé en ce qu'on applique comme couche de fond d'adhérence du polyvinylbutyral en une quantité comprise entre 2 et 10 g/m$^2$ sur la surface de la couche de recouvrement.

**FIG.1**

**FIG.2**

**FIG.3**